# EUROPÄISCHE PATENTSCHRIFT

(11) **EP 3 378 753 B1**
(45) Veröffentlichungstag und Bekanntmachung des Hinweises auf die Patenterteilung: **20.05.2020**
(21) Anmeldenummer: 18161402.5
(22) Anmeldetag: 13.03.2018
(51) Int. Cl.: B62K 27/00, B62K 27/06, B60D 1/00

(54) **FAHRRADANHÄNGER MIT EINER DREHSTABFEDER**
BICYCLE TRAILER EQUIPPED WITH A TORSION BAR REAR SUSPENSION
REMORQUE DE BICYCLETTE POURVUE D'UNE SUSPENSION A BARRE DE TORSION

(30) Priorität: 22.03.2017 DE 102017106139
(43) Veröffentlichungstag der Anmeldung: 26.09.2018
(73) Patentinhaber: Kettler Alu-Rad GmbH, 50739 Köln (DE)
(72) Erfinder: Fiegl, Thomas, 64367 Mühltal (DE); Pohl, Achim, 64342 Seeheim-Jugenheim (DE)
(74) Vertreter: WSL Patentanwälte Partnerschaft mbB

(56) Entgegenhaltungen:
- EP-A1- 2 842 855
- CA-A1- 2 074 316
- US-A- 3 792 875
- US-A1- 2003 111 813

## Beschreibung

Die vorliegende Erfindung betrifft einen Fahrradanhänger mit einem Anhängerrahmen und einer mit dem Anhängerrahmen verbundenen Radaufhängung, wobei die Radaufhängung zwei Radschwingen mit jeweils einer Radaufnahme aufweist, wobei die Radschwingen derart an dem Anhängerrahmen angelenkt sind, dass jede der Radaufnahmen relativ zu dem Anhängerrahmen in einer von zwei parallel zueinander ausgerichteten Schwenkebenen um eine gemeinsame Drehachse verschwenkbar ist.

Fahrradanhänger werden für den Transport von Waren bzw. vermehrt auch für den Transport von Kindern eingesetzt. Um den Fahrkomfort und die Straßenlage zu verbessern, weisen die Fahrradanhänger eine gefederte Radaufhängung auf, die Bodenunebenheiten ausgleichen soll.

Eine Radaufhängung für ein nicht motorisiertes Fahrzeug, insbesondere für einen Kinderwagen oder einen Fahrradanhänger zum Transport von Kindern, ist beispielsweise aus der deutschen Patentanmeldung DE 10 2013 109 230 A1 bekannt. Der Fahrradanhänger weist eine Radaufhängung mit zwei Radschwingen auf. Jede der Radschwingen hat eine Radaufnahme zur Befestigung eines Hinterrads. Um Bodenunebenheiten auszugleichen, ist jede Radschwinge mit einem elastischen Element aus einem formstabilen Polyurethanweichschaumwerkstoff federnd gegenüber dem Anhängerrahmen des Fahrradanhängers abgestützt.

Aus der Patentschrift US 3,792,875 A ist ein zusammenfaltbarer Fahrradanhänger mit einer Drehstabfeder bekannt. Ein zentraler Abschnitt der Drehstabfeder ist über einen Sockel und einen Nocken an dem Fahrradrahmen abstützbar, während die zwei Enden der Drehstabfeder jeweils mit einer Radschwinge verbunden sind. Patentschrift US 3,792,875 A offenbart alle Merkmale des Oberbegriffs des Anspruchs 1.

Herkömmliche Radaufhängungen weisen jedoch den Nachteil auf, dass die Federkraft des elastischen Elements nicht an die Zuladung des Fahrradanhängers, an die Bodenbeschaffenheit oder das subjektive Fahrempfinden der Fahrgäste einstellbar ist. Ist die Federung beispielsweise für das Gesamtgewicht des Fahrradanhängers "zu hart", kann der Fahrradanhänger bei einer Fahrt über Bodenunebenheiten den Bodenkontakt verlieren. Das Fahrverhalten des Fahrradanhängers wird instabil und gefährdet mitunter die Sicherheit der Insassen oder der Zuladung. Ist die Federung für das Gesamtgewicht des Fahrradanhängers "zu weich", droht der Fahrradanhänger beim Überfahren von Bodenwellen mit dem Anhängerrahmen aufzusetzen. Gerade in ihrer Wachstumsphase verändert sich das Gewicht von Kindern, sodass die Federung herkömmlicher Fahrradanhänger meist unzureichend an das Gewicht der zu transportierenden Kinder angepasst ist.

Es ist daher eine Aufgabe der vorliegenden Erfindung einen Fahrradanhänger mit einem verbesserten Fahrkomfort und einer verbesserten Straßenlage bereitzustellen.

Zumindest eine dieser Aufgaben wird durch einen Fahrradanhänger der eingangs genannten Art gelöst, wobei die Radschwingen über eine Drehstabfeder derart miteinander verbunden sind, dass zwischen jeder der Radschwingen und der Drehstabfeder ein Drehmoment (M₁, M₂) übertragbar ist, wobei die Drehstabfeder senkrecht zu den zwei parallelen Schwenkebenen und entlang der gemeinsamen Drehachse der Radschwingen angeordnet ist, und wobei die Drehstabfeder derart mit dem Anhängerrahmen verbunden ist, dass zwischen der Drehstabfeder und dem Anhängerrahmen ein den in die Drehstabfeder über die Radschwingen eingeleiteten Drehmomenten (M₁, M₂) entgegenwirkendes Drehmoment (M₃) übertragbar sowie eine Vorspannung der Drehstabfeder einstellbar ist.

Im Sinne der vorliegenden Erfindung umfasst der Begriff "Fahrradanhänger" Anhänger die zum Ziehen mit einem Fahrrad geeignet sind. Der Begriff "Fahrradanhänger" umfasst insbesondere Fahrradanhänger zum Transport von Kindern sowie Kinderwagen, Buggy, Jogger oder 2-in-1-Kinderwagen-Fahrradanhänger, die als Kinderwagen und Fahrradanhänger verwendet werden können. Lediglich der Einfachheit der Beschreibung wegen wird im Folgenden der Begriff "Fahrradanhänger" verwendet.

Fährt der Fahrradanhänger mit einem Rad über eine Bodenwelle wird das Rad entgegen der Gewichtskraft des Fahrradanhängers und der Zuladung nach oben gedrückt. Die an dem Anhängerrahmen angelenkte Radschwinge wird zusammen mit der Radaufnahme relativ um die Drehachse der Radschwinge ausgelenkt. Die Auslenkung der Radschwinge verursacht ein Drehmoment (M₁, M₂), welches auf die mit der Radschwinge verbundene Drehstabfeder wirkt und in die Drehstabfeder eingeleitet wird. Die Drehstabfeder ist mit dem Anhängerrahmen derart verbunden, dass zwischen der Drehstabfeder und dem Anhängerrahmen ein Drehmoment (M₃) übertragbar ist, welches den von den Radschwingen auf die Drehstabfeder eingeleiteten Drehmomenten (M₁, M₂) entgegenwirkt. Die entgegenwirkenden Drehmomente bewirken, dass sich die Drehstabfeder um ihre Längsachse verdreht, wobei die in den Querschnitten der Drehstabfeder auftretenden Torsions- und Scherspannungen der Torsion der Drehstabfeder entgegenwirken und so letztendlich die Auslenkbewegung der Radschwinge dämpfen.

Die Einstellbarkeit der Vorspannung der Drehstabfeder erlaubt es, die Dämpfung der Drehstabfeder einzustellen und die Federung des Fahrradanhängers an die Zuladung, Bodenbeschaffenheit oder das subjektive Fahrempfinden der Insassen einzustellen.

In einer Ausführungsform ist die Drehstabfeder über einen Hebelarm derart mit dem Anhängerrahmen verbunden, dass das den in die Drehstabfeder über die Radschwingen eingeleiteten Drehmomenten (M₁, M₂) entgegenwirkende Drehmoment (M₃) zwischen der Drehstabfeder und dem Anhängerrahmen übertragbar sowie die Vorspannung der Drehstabfeder einstellbar ist, wobei der Hebelarm einen ersten Verbindungsabschnitt und einen zweiten Verbindungsabschnitt sowie eine den ersten Verbindungsabschnitt und den zweiten Verbindungsabschnitt verbindende Längsachse aufweist, wobei der erste Verbindungsabschnitt des Hebelarms mit der Drehstabfeder und der zweite Verbindungsabschnitt des Hebelarms zum Übertragen eines Drehmoments mit dem Anhängerrahmen verbunden ist.

Ist der erste Verbindungsabschnitt des Hebelarms mit der Drehstabfeder und der zweite Verbindungsabschnitt mit dem Anhängerrahmen zum Übertragen von Drehmomenten verbunden, so ist durch die Einstellbarkeit des Hebelarms die Vorspannung der Drehstabfeder einstellbar. Die Einstellung des Hebelarms wirkt auf beide sich zwischen dem ersten Verbindungsabschnitt und je einer der Radschwingen erstreckenden Abschnitte der Drehstabfeder. Jeder der sich zwischen dem ersten Verbindungsabschnitt und einer der Radschwingen erstreckende Abschnitt der Drehstabfeder, wirkt dabei als eine eigenständige Drehstabfeder. Insbesondere ist die Dämpfung der sich auf beiden Seiten des ersten Verbindungsabschnittes bis zu den Radschwingen erstreckenden Abschnitte der Drehstabfeder unabhängig voneinander. Weil beide Abschnitte der Drehstabfeder mit dem ersten Verbindungsabschnitt verbunden sind, wirkt die Einstellung des Hebelarms auf beide Abschnitte der Drehstabfeder. Auf diese Weise kann die Vorspannung für beide Abschnitte der Drehstabfeder gleichzeitig bzw. zentral eingestellt werden. Es versteht sich das im Sinne der vorliegenden Erfindung, die Drehstabfeder zweiteilig oder mehrteilig ausgeführt sein kann.

In einer Ausführungsform weist der erste Verbindungsabschnitt des Hebelarms und/oder der zweite Verbindungsabschnitt des Hebelarms Mittel zum Einstellen einer Verdrehung der Drehstabfeder in den Abschnitten zwischen dem ersten Verbindungsabschnitt und je einer der Radschwingen um die Längsachse der Drehstabfeder auf. Ein über eine der Radschwingen in die Drehstabfeder eingeleitetes Drehmoment (M₁, M₂) wirkt entlang der Drehachse der Drehstabfeder auf den ersten Verbindungsabschnitt des Hebelarms. Weil der Hebelarm mit dem zweiten Verbindungsabschnitt zum Übertragen eines Drehmoments (M₃) mit dem Anhängerrahmen verbunden ist, verdreht sich die Drehstabfeder um ihre Längsachse in dem jeweiligen Abschnitt zwischen der Radschwinge, über die das Drehmoment (M₁, M₂) in die Drehstabfeder eingeleitet wird, und dem ersten Verbindungsabschnitt des Hebelarms. Ist der erste Verbindungsabschnitt des Hebelarms derart mit der Drehstabfeder verbunden, dass eine Verdrehung der Drehstabfeder um die Längsachse der Drehstabfeder einstellbar ist, kann eine Verdrehung der Drehstabfeder voreingestellt werden die in Richtung des über die Radschwinge in die Drehstabfeder eingeleiteten Drehmomentes (M₁, M₂) entgegenwirkt oder dieses verstärkt. Somit ist über die Einstellung einer Verdrehung der Drehstabfeder in den Abschnitten zwischen dem ersten Verbindungsabschnitt und je einer der Radschwingen die Vorspannung der Drehstabfeder einstellbar.

In einer Ausführungsform weist das Mittel zum Einstellen einer Verdrehung der Drehstabfeder in den Abschnitten zwischen dem ersten Verbindungsabschnitt des Hebelarms und je einer der Radschwingen eine Stellschraube auf. Vorzugsweise ist die Stellschraube derart an dem zweiten Verbindungsabschnitt des Hebelarms angeordnet, dass über eine Betätigung der Stellschraube der Abstand zwischen der Längsachse des Hebelarms und denjenigen Abschnitt des Anhängerrahmens mit dem der zweite Verbindungsabschnitt an dem Anhängerrahmen zum Übertragen eines Drehmomentes M₃ befestigt ist, gemessen in einer Ebene parallel zu einer der Schwenkebenen, einstellbar ist. Alternativ ist die Stellschraube derart an dem ersten Verbindungsabschnitt angeordnet, dass über eine Betätigung der Stellschraube der Abstand zwischen der Längsachse des Hebelarms und dem Abschnitt der Drehstabfeder mit dem der erste Verbindungsabschnitt an der Drehstabfeder zum Übertragen eines Drehmomentes M₃ befestigt ist, gemessen in einer Ebene parallel zu einer der Schwenkebenen, einstellbar ist. Es versteht sich, dass der erste Verbindungsabschnitt und der zweite Verbindungsabschnitt jeweils eine Stellschraube aufweisen können, sodass der Abstand zwischen der Längsachse des Hebelarms und der Drehstabfeder und der Abstand zwischen der Längsachse des Hebelarms und dem Anhängerrahmen einstellbar sind. Eine Veränderung des Abstandes zwischen der Längsachse des Hebelarms und dem Anhängerrahmen und/oder eine Veränderung des Abstandes zwischen der Längsachse des Hebelarms und der Drehstabfeder, bewirkt ein Drehmoment, welches über den ersten Verbindungsabschnitt des Hebelarms auf die Drehstabfeder wirkt und die Vorspannung der Drehstabfeder verändert.

In einer Ausführungsform weist der erste Verbindungsabschnitt einen einstellbaren Einspannabschnitt zum rotationsfesten Einspannen der Drehstabfeder auf, wobei vorzugsweise der Einspannabschnitt die Drehstabfeder mit winklig zueinander angeordneten Einspannflächen umgreift und/oder die Drehstabfeder winklig zueinander angeordnete Aufnahmeflächen zum in Eingriff bringen mit dem Einspannabschnitt aufweist. Mit dem einstellbaren Einspannabschnitt kann die Drehstabfeder in einem verdrehten Zustand um ihre Längsachse rotationsfest eingespannt und gegenüber dem Anhängerrahmen über den Hebelarm abgestützt werden. Die rotationsfeste Einspannung verhindert, dass die in den Querschnitten der Drehstabfeder auftretenden Torsions- und Scherspannungen die eingestellte Verdrehung rückgängig machen. Darüber hinaus hilft die rotationsfeste Einspannung der Drehstabfeder, dass ein Drehmoment zwischen dem Hebelarm und der Drehstabfeder übertragbar ist.

In einer weiteren Ausführungsform weisen die Radschwingen je einen Einspannabschnitt zum rotationsfesten Einspannen der Drehstabfeder auf, wobei vorzugsweise der Einspannabschnitt der Radschwingen die Drehstabfeder mit winklig zueinander angeordneten Einspannflächen umgreift und/oder die Drehstabfeder winklig zueinander angeordnete Aufnahmeflächen zum in Eingriff bringen mit dem Einspannabschnitt der Radschwingen aufweist. Die Einspannabschnitte der Radschwingen wirken wie die zuvor beschriebenen Einspannabschnitte des ersten Verbindungsabschnittes des Hebelarms, sodass über die Einspannabschnitte der Radschwingen eine Verdrehung der Drehstabfeder um ihre Längsachse einstellbar ist. Die rotationsfeste Einspannung bewirkt auch, dass ein Drehmoment zwischen der jeweiligen Radschwinge und der Drehstabfeder übertragbar ist.

In einer Ausführungsform sind der erste Verbindungsabschnitt des Hebelarms und/oder der zweite Verbindungsabschnitt des Hebelarms in Richtung der Längserstreckung der Drehstabfeder in der Mitte zwischen den Radschwingen angeordnet. Durch den in Richtung der Längserstreckung der Drehstabfeder mittig angeordneten ersten und/oder zweiten Verbindungsabschnitt wirkt ein über den Hebelarm in den Drehstab eingeleitetes Drehmoment zu gleichen Anteilen auf jeden der Abschnitte der Drehstabfeder zwischen dem ersten Verbindungsabschnitt und einer der Radschwingen. Die Einstellung der Vorspannung der Drehstabfeder wirkt daher zu gleichen Teilen auf beide mit der Drehstabfeder verbundenen Radschwingen.

In einer Ausführungsform begrenzt ein erster Anschlag den Schwenkbereich mindestens einer der Radschwingen, vorzugsweise aller Radschwingen, in eine erste Schwenkrichtung, und/oder ein zweiter Anschlag den Schwenkbereich mindestens einer der Radschwingen, vorzugsweise aller Radschwingen, in eine zweite, entgegengesetzte Schwenkrichtung, wobei vorzugsweise der erste Anschlag und/oder der zweite Anschlag mit dem Anhängerrahmen verbunden ist und/oder durch den Anhängerrahmen gebildet ist. Der erste und/oder zweite Anschlag begrenzt den maximalen Schwenkwinkel, um den die jeweilige Radschwinge verschwenkt werden kann. Die Begrenzung verhindert, dass die mit der Radschwinge verbundene Drehstabfeder durch eine zu große Verschwenkung beschädigt wird.

Um die Verwindungssteifigkeit des Fahrradanhängers zu erhöhen, weist der Anhängerrahmen in einer Ausführungsform eine parallel zu der Drehstabfeder angeordnete Versteifungsstrebe auf.

Weitere Vorteile, Merkmale und Anwendungsmöglichkeiten der vorliegenden Erfindung werden anhand der vorliegenden Beschreibung einer Ausführungsform und der dazugehörigen Figuren deutlich, wobei gleiche Bezugszeichen auf gleiche Elemente verweisen. Es zeigen:
- Figur 1: einen Ausschnitt einer Ausführungsform des erfindungsgemäßen Fahrradanhängers in einer Perspektivansicht von schräg oben;
- Figur 2: einen Ausschnitt der Ausführungsform aus Figur 1 in einer perspektivischen Seitenansicht; und
- Figur 3: einen Ausschnitt der Ausführungsform aus Figur 1 in einer perspektivischen Ansicht von unten.

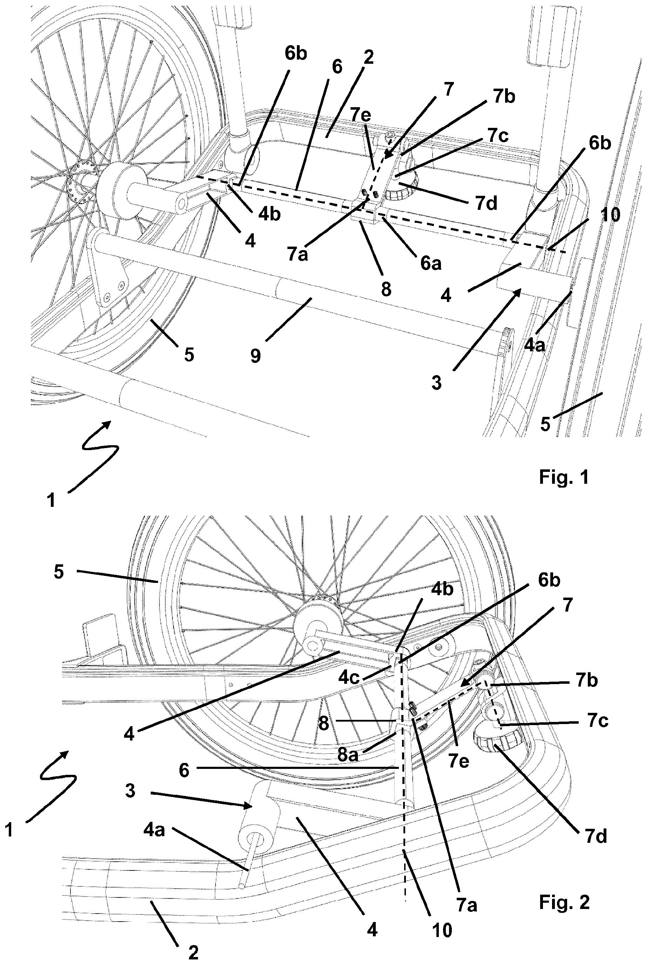

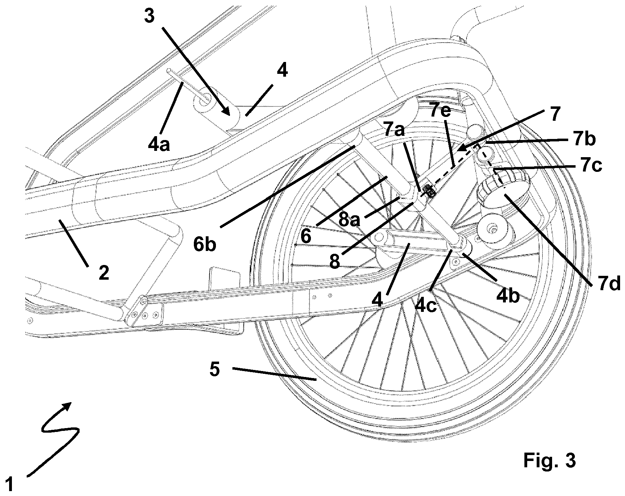

Die Figuren 1 bis 3 zeigen Ausschnitte einer Ausführungsform des erfindungsgemäßen Fahrradanhängers 1 aus verschiedenen Perspektiven. Der Fahrradanhänger 1 weist einen Anhängerrahmen 2 und eine mit dem Anhängerrahmen 2 verbundene Radaufhängung 3 auf. Die Radaufhängung 3 hat zwei Radschwingen 4 mit je einer Radaufnahme 4a zur Befestigung eines Rades 5. Zu Anschauungszwecken ist in den Figuren 2 und 3 nur mit einer der Radaufnahmen 4a ein Rad 5 verbunden.

Jede der Radschwingen 4 ist derart an dem Anhängerrahmen 2 angelenkt, dass jeder der Radaufnahmen 4a relativ zu dem Anhängerrahmen 2 in einer von zwei parallel zueinander ausgerichteten Schwenkebenen um eine gemeinsame Drehachse 10 verschwenkbar ist.

Weiter sind die Radschwingen 4 derart über eine Drehstabfeder 6 miteinander verbunden, dass zwischen jeder der Radschwingen 4 und der Drehstabfeder 6 ein Drehmoment M₁, M₂ übertragbar ist. Die Drehstabfeder 6 ist senkrecht zu den zwei parallelen Schwenkebenen der Radschwingen 4 und entlang der gemeinsamen Drehachse 10 der Radschwingen 4 angeordnet. Damit zwischen den Radschwingen 4 und der Drehstabfeder 6 Drehmomente M₁, M₂ gut übertragen werden können, weist die Drehstabfeder 6 winklig zueinander angeordnete Aufnahmeflächen 6b auf, die mit winklig zueinander angeordneten Einspannflächen 4c eines Einspannabschnittes 4b der Radschwinge 4 rotationsfest verbunden sind. Die winklig zueinander angeordneten Einspannflächen 4c umgreifen die winklig zueinander angeordneten Aufnahmeflächen 6b der Drehstabfeder 6.

Die Drehstabfeder 6 und der Anhängerrahmen 2 sind weiter derart über ein Hebelarm 7 miteinander verbunden, dass zwischen der Drehstabfeder 6 und dem Anhängerrahmen 2 ein Drehmoment M₃ übertragbar ist.

Wird eine oder werden beide Radschwingen 4 ausgelenkt, wird von den Radschwingen 4 ein Drehmoment M₁, M₂ auf die Drehstabfeder 6 übertragen. Ein von dem Anhängerrahmen 2 über den Hebelarm 7 auf die Drehstabfeder 6 übertragenes Drehmoment M₃ wirkt den von den Radschwingen 4 in die Drehstabfeder 6 eingeleiteten Drehmoment M₁, M₂ entgegen und dämpft die Auslenkbewegung der Radschwingen 4.

Für die Übertragung eines Drehmomentes M₃ zwischen dem Anhängerrahmen 2 und der Drehstabfeder 6, weist der Hebelarm 7 der gezeigten Ausführungsform einen ersten Verbindungsabschnitt 7a und einen zweiten Verbindungsabschnitt 7b auf sowie eine den ersten Verbindungsabschnitt 7a und den zweiten Verbindungsabschnitt 7b verbindende Längsachse 7e. Der erste Verbindungsabschnitt 7a ist mit der Drehstabfeder 6 verbunden, wobei der erste Verbindungsabschnitt 7a einen einstellbaren Einspannabschnitt 8 mit winklig zueinander angeordneten Einspannflächen 8a aufweist, die ebenfalls winklig zueinander angerordnete Aufnahmeflächen 6a der Drehstabfeder 6 umgreifen. Auf diese Weise ist die Drehstabfeder 6 rotationsfest in dem ersten Verbindungsabschnitt 7a eingespannt. Die gegenseitige Ausrichtung der Aufnahmeflächen 6a der Drehstabfeder 6 und der Einspannflächen 8a ist relativ zu der Drehachse 10 der Drehstabfeder 6 einstellbar. Durch die Einstellbarkeit der Ausrichtung der Aufnahmeflächen 6a und den Einspannflächen 8a ist die Vorspannung der Drehstabfeder 6 einstellbar.

Rahmenseitig ist der zweite Verbindungsabschnitt 7b des Hebelarms 7 mit dem Anhängerrahmen 2 derart verbunden, dass ein Drehmoment M₃ zwischen dem Anhängerrahmen 2 und dem Hebelarm 7 übertragbar ist. Der Verbindungsabschnitt 7b weist eine Stellschraube 7c auf, die über einen Drehknauf 7d betätigbar ist. Durch Drehen der Stellschraube 7c ändert sich der Abstand, gemessen in einer Ebene parallel zu einer der Schwenkebenen, zwischen der Längsachse 7e des Hebelarms 7 und dem Abschnitt des Anhängerrahmens 2 mit dem der zweite Verbindungsabschnitt 7b an dem Anhängerrahmen 2 zum Übertragen eines Drehmomentes M₃ befestigt ist. Die Abstandsänderung bewirkt, dass die Drehstabfeder 6 um ihre Längsachse 10 verdreht wird. Auf diese Weise ist die Vorspannung der Drehstabfeder 6 durch Betätigen der Stellschraube 7c einstellbar.

Der erste Verbindungsabschnitt 7a und der zweite Verbindungsabschnitt 7b des Hebelarms 7 sind beide in Richtung der Längserstreckung der Drehstabfeder 6 mittig zwischen den Radschwingen 4 angeordnet. Die Einstellbarkeit der Vorspannung der Drehstabfeder 6 über den Hebelarm 7 wirkt daher zu gleichen Teilen auf die sich von dem ersten Verbindungsabschnitt 7a zu jeder der Radschwingen 4 erstreckenden Abschnitte der Drehstabfeder 6. Die Abschnitte zwischen jeder der Radschwingen 4 und dem ersten Verbindungsabschnitt 7a sind, gemessen in eine Richtung entlang der Drehachse 10 der Drehstabfeder 6, gleich lang. Die Drehachse 10 entspricht der Längsachse der Drehstabfeder 6.

Um die Verwindungssteifigkeit des Anhängerrahmens 2 zu erhöhen, ist parallel zu der Drehstabfeder 6 eine Versteifungstrebe 9 angeordnet, wobei die Versteifungsstrebe 9 in den Figuren 2 und 3 nicht dargestellt ist.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarerer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschreiben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Fahrradanhänger
- 2: Anhängerrahmen
- 3: Radaufhängung
- 4: Radschwinge
- 4a: Radaufnahme
- 4b: Einspannabschnitt der Radschwinge
- 4c: Einspannflächen des Einspannabschnittes der Radschwinge
- 5: Rad
- 6: Drehstabfeder
- 6a: Aufnahmeflächen zum in Eingriff bringen mit dem Einspannabschnitt 8 des Hebelarms 7
- 6b: Aufnahmeflächen zum in Eingriff bringen mit dem Einspannabschnitt 4a der Radschwinge 4
- 7: Hebelarm
- 7a: erster Verbindungsabschnitt des Hebelarms 7
- 7b: zweiter Verbindungsabschnitt des Hebelarms 7
- 7c: Stellschraube
- 7d: Drehknauf
- 7e: Längsachse des Hebelarms
- 8: Einspannabschnitt
- 8a: Einspannflächen
- 9: Versteifungsstrebe
- 10: Drehachse

## Patentansprüche

1. Fahrradanhänger (1) mit einem Anhängerrahmen (2) und einer mit dem Anhängerrahmen (2) verbundenen Radaufhängung (3), wobei die Radaufhängung (3) zwei Radschwingen (4) mit jeweils einer Radaufnahme (4a) aufweist, wobei die Radschwingen (4) derart an dem Anhängerrahmen (2) angelenkt sind, dass jede der Radaufnahmen (4a) relativ zu dem Anhängerrahmen (2) in einer von zwei parallel zueinander ausgerichteten Schwenkebenen um eine gemeinsame Drehachse (10) verschwenkbar ist, wobei die Radschwingen (4) über eine Drehstabfeder (6) derart miteinander verbunden sind, dass zwischen jeder der Radschwingen (4) und der Drehstabfeder (6) ein Drehmoment (M₁, M₂) übertragbar ist, wobei die Drehstabfeder (6) senkrecht zu den zwei parallelen Schwenkebenen und entlang der gemeinsamen Drehachse (10) der Radschwingen (4) angeordnet ist, wobei die Drehstabfeder (6) derart mit dem Anhängerrahmen (2) verbunden ist, dass zwischen der Drehstabfeder (6) und dem Anhängerrahmen (2) ein den in die Drehstabfeder (6) über die Radschwingen (4) eingeleiteten Drehmomenten (M₁, M₂) entgegenwirkendes Drehmoment (M₃) übertragbar ist, **dadurch gekennzeichnet, dass** die Drehstabfeder (6) derart mit dem Anhängerrahmen (2) verbunden ist, dass eine Vorspannung der Drehstabfeder (6) einstellbar ist.

2. Fahrradanhänger (1) nach Anspruch 1, **dadurch gekennzeichnet, dass** die Drehstabfeder (6) über einen Hebelarm (7) derart mit dem Anhängerrahmen (2) verbunden ist, dass das den in die Drehstabfeder (6) über die Radschwingen (4) eingeleiteten Drehmomenten (M₁, M₂) entgegenwirkende Drehmoment (M₃) zwischen der Drehstabfeder (6) und dem Anhängerrahmen (2) übertragbar sowie die Vorspannung der Drehstabfeder (6) einstellbar ist, wobei der Hebelarm (7) einen ersten Verbindungsabschnitt (7a) und einen zweiten Verbindungsabschnitt (7b) sowie eine den ersten Verbindungsabschnitt (7a) und den zweiten Verbindungsabschnitt (7b) verbindende Längsachse aufweist, wobei der erste Verbindungsabschnitt (7a) des Hebelarms (7) mit der Drehstabfeder (6) und der zweite Verbindungsabschnitt (7b) des Hebelarms (7) zum Übertragen eines Drehmoments (M₃) mit dem Anhängerrahmen (2) verbunden ist.

3. Fahrradanhänger (1) nach Anspruch 2, **dadurch gekennzeichnet, dass** erste Verbindungsabschnitt (7a) des Hebelarms (7) und/oder der zweite Verbindungsabschnitt (7b) des Hebelarms (7) Mittel zum Einstellen einer Verdrehung der Drehstabfeder (6) in den Abschnitten zwischen dem ersten Verbindungsabschnitt (7a) und je einer der Radschwingen (4) um die Längsachse (10) der Drehstabfeder (6) aufweist.

4. Fahrradanhänger (1) nach Anspruch 3, **dadurch gekennzeichnet, dass** das Mittel zum Einstellen einer Verdrehung eine Stellschraube (7c) aufweist.

5. Fahrradanhänger (1) nach einem der Ansprüche 2 bis 4, **dadurch gekennzeichnet, dass** der erste Verbindungsabschnitt (7a) einen einstellbaren Einspannabschnitt (8) zum rotationsfesten Einspannen der Drehstabfeder (6) aufweist, wobei vorzugsweise der Einspannabschnitt (8) die Drehstabfeder (6) mit winklig zueinander angeordneten Einspannflächen (8a) umgreift und/oder die Drehstabfeder (6) winklig zueinander angeordnete Aufnahmeflächen (6a) zum in Eingriff bringen mit dem Einspannabschnitt (8) aufweist.

6. Fahrradanhänger (1) nach einem der Ansprüche 1 bis 5, **dadurch gekennzeichnet, dass** die Radschwingen (4) je einen Einspannabschnitt (4b) zum rotationsfesten Einspannen des der Drehstabfeder (6) aufweisen, wobei vorzugsweise der Einspannabschnitt (4b) der Radschwingen (4) der Drehstabfeder (6) mit winklig zueinander angeordneten Einspannflächen (4c) umgreift und/oder die Drehstabfeder (6) winklig zueinander angeordnete Aufnahmeflächen (6b) zum in Eingriff bringen mit dem Einspannabschnitt (4b) der Radschwingen (4) aufweist.

7. Fahrradanhänger (1) nach einem der Ansprüche 2 bis 6, **dadurch gekennzeichnet, dass** der erste Verbindungsabschnitt (7a) des Hebelarms (7) und/oder der zweite Verbindungsabschnitt (7b) des Hebelarms (7) in Richtung der Längserstreckung der Drehstabfeder (6) in der Mitte zwischen den Radschwingen (4) angeordnet ist.

8. Fahrradanhänger (1) nach einem der Ansprüche 1 bis 7, **dadurch gekennzeichnet, dass** ein erster Anschlag den Schwenkbereich mindestens einer der Radschwingen (4), vorzugsweise aller Radschwingen (4), in eine erste Schwenkrichtung, und/oder ein zweiter Anschlag den Schwenkbereich mindestens einer der Radschwingen (4), vorzugsweise aller Radschwingen (4), in eine zweite Schwenkrichtung begrenzt, wobei vorzugsweise der erste Anschlag und/oder der zweite Anschlag mit dem Anhängerrahmen (2) verbunden ist und/oder durch den Anhängerrahmen (2) gebildet ist.

9. Fahrradanhänger (1) nach einem der Ansprüche 1 bis 8, **dadurch gekennzeichnet, dass** der Anhängerrahmen (2) eine parallel zu der Drehstabfeder (6) angeordnete Versteifungsstrebe (9) aufweist.

## Claims

1. A bicycle trailer (1) comprising a trailer frame (2) and a wheel suspension (3) connected to the trailer frame (2), wherein the wheel suspension (3) has two wheel swing arms (4) each having a wheel mounting (4a), wherein the wheel swing arms (4) are pivotably connected to the trailer frame (2) in such a way that each of the wheel mountings (4a) is pivotable relative to the trailer frame (2) in one of two pivot planes oriented in mutually parallel relationship about a common axis of rotation (10), wherein the wheel swing arms (4) are connected together by way of a torsion bar spring (6) in such a way that a torque (M₁, M₂) can be transmitted between each of the wheel swing arms (4) and the torsion bar spring (6), wherein the torsion bar spring (6) is arranged perpendicularly to the two parallel pivot planes and along the common axis of rotation (10) of the wheel swing arms (4), wherein the torsion bar spring (6) is connected to the trailer frame (2) in such a way that a torque (M₃) counteracting the torques (M₁, M₂) introduced into the torsion bar spring (6) by way of the wheel swing arms (4) can be transmitted between the torsion bar spring (6) and the trailer frame (2), **characterised in that** the torsion bar spring (6) is connected to the trailer frame (2) in such a way that a prestressing of the torsion bar spring (6) is adjustable.

2. A bicycle trailer (1) according to claim 1 **characterised in that** the torsion bar spring (2) is connected to the trailer frame (2) by way of a lever arm (7) in such a way that the torque (M₃) counteracting the torques (M₁, M₂) introduced into the torsion bar spring (6) by way of the wheel swing arms (4) can be transmitted between the torsion bar spring (6) and the trailer frame (2) and the prestressing of the torsion bar spring (6) is adjustable, wherein the lever arm (7) has a first connecting portion (7a) and a second connecting portion (7b) and a longitudinal axis connecting the first connecting portion (7a) and the second connecting portion (7b), wherein the first connecting portion (7a) of the lever arm (7) is connected to the torsion bar spring (6) and the second connecting portion (7b) of the lever arm (7) is connected to the trailer frame (2) for transmitting a torque (M₃).

3. A bicycle trailer (1) according to claim 2 **characterised in that** the first connecting portion (7a) of the lever arm (7) and/or the second connecting portion (7b) of the lever arm (7) has means for adjusting a rotation of the torsion bar spring (6) in the portions between the first connecting portion (7a) and a respective one of the wheel swing arms (4) about the longitudinal axis (10) of the torsion bar spring (6).

4. A bicycle trailer (1) according to claim 3 **characterised in that** the means for adjusting rotation has an adjusting screw (7c).

5. A bicycle trailer (1) according to one of claims 2 to 4 **characterised in that** the first connecting portion (7a) has an adjustable clamping portion (8) for rotationally fixed clamping of the torsion bar spring (6), wherein preferably the clamping portion (8) embraces the torsion bar spring (6) with clamping surfaces (8a) arranged in mutually angular relationship and/or the torsion bar spring (6) has receiving surfaces (6a) arranged in mutually angular relationship for coming into engagement with the clamping portion (8).

6. A bicycle trailer (1) according to one of claims 1 to 5 **characterised in that** the wheel swing arms (4) each have a respective clamping portion (4b) for rotationally fixed clamping of the torsion bar spring (6), wherein preferably the clamping portion (4b) of the wheel swing arms (4) embraces the torsion bar spring (6) with clamping surfaces (4c) arranged in mutually angular relationship and/or the torsion bar spring (6) has receiving surfaces (6b) arranged in mutually angular relationship for coming into engagement with the clamping portion (4b) of the wheel swing arms (4).

7. A bicycle trailer (1) according to one of claims 2 to 6 **characterised in that** the first connecting portion (7a) of the lever arm (7) and/or the second connecting portion (7b) of the lever arm (7) are arranged in the direction of the longitudinal extent of the torsion bar spring (6) in the centre between the wheel swing arms (4).

8. A bicycle trailer (1) according to one of claims 1 to 7 **characterised in that** a first abutment limits the pivotal range of at least one of the wheel swing arms (4), preferably all wheel swing arms (4), in a first pivotal direction, and/or a second abutment limits the pivotal range of at least one of the wheel swing arms (4), preferably all wheel swing arms (4), in a second pivotal direction, wherein preferably the first abutment and/or the second abutment is connected to the trailer frame (2) and/or is formed by the trailer frame (2).

9. A bicycle trailer (1) according to one of claims 1 to 8 **characterised in that** the trailer frame (2) has a reinforcing strut (9) arranged parallel to the torsion bar spring (6).

## Revendications

1. Remorque de bicyclette (1) pourvue d'un cadre de remorque (2) et d'une suspension de roue (3) reliée au cadre de remorque (2), dans laquelle la suspension de roue (3) comporte deux bras oscillants (4) pourvus chacun d'un logement de roue (4a), les bras oscillants (4) étant articulés sur le cadre de remorque (2) de telle sorte que chacun des logements de roue (4a) peut pivoter par rapport au cadre de remorque (2), autour d'un axe de rotation (10) commun, dans l'un de deux plans de pivotement orientés de manière parallèle entre eux, les bras oscillants (4) étant reliés ensemble par l'intermédiaire d'un ressort à barre de torsion (6) de façon telle qu'un couple de rotation (M₁, M₂) peut être transmis entre chacun des bras oscillants (4) et le ressort à barre de torsion (6), le ressort à barre de torsion (6) étant disposé perpendiculairement aux deux plans de pivotement parallèles et le long de l'axe de rotation (10) commun des bras oscillants (4), le ressort à barre de torsion (6) étant relié au cadre de remorque (2) de façon telle qu'un couple de rotation (M₃) agissant à l'encontre des couples de rotation (M₁, M₂) introduits dans le ressort à barre de torsion (6) par l'intermédiaire des bras oscillants (4) peut être transmis entre le ressort à barre de torsion (6) et le cadre de remorque (2),
**caractérisée en ce que**
le ressort à barre de torsion (6) est relié au cadre de remorque (2) de telle sorte qu'une précontrainte du ressort à barre de torsion (6) est réglable.

2. Remorque de bicyclette (1) selon la revendication 1, **caractérisée en ce que** le ressort à barre de torsion (6) est relié au cadre de remorque (2) par l'intermédiaire d'un bras de levier (7) de façon à permettre la transmission du couple de rotation (M₃) agissant à l'encontre des couples de rotation (M₁, M₂) introduits dans le ressort à barre de torsion (6), par l'intermédiaire des bras oscillants (4), entre le ressort à barre de torsion (6) et le cadre de remorque (2), ainsi que le réglage de la précontrainte du ressort à barre de torsion (6), le bras de levier (7) comprenant une première partie de liaison (7a) et une seconde partie de liaison (7b) ainsi qu'un axe longitudinal reliant la première partie de liaison (7a) et la seconde partie de liaison (7b), la première partie de liaison (7a) du bras de levier (7) étant reliée au ressort à barre de torsion (6) et la seconde partie de liaison (7b) du bras de levier (7) au cadre de remorque (2) pour la transmission d'un couple de rotation (M₃).

3. Remorque de bicyclette (1) selon la revendication 2, **caractérisée en ce que** la première partie de liaison (7a) du bras de levier (7) et/ou la seconde partie de liaison (7b) du bras de levier (7) comporte(nt) des moyens de réglage d'une rotation du ressort à barre de torsion (6) dans les parties comprises entre la première partie de liaison (7a) et respectivement l'un des bras oscillants (4), autour de l'axe longitudinal (10) du ressort à barre de torsion (6).

4. Remorque de bicyclette (1) selon la revendication 3, **caractérisée en ce que** le moyen de réglage d'une rotation comprend une vis de réglage (7c).

5. Remorque de bicyclette (1) selon l'une des revendications 2 à 4, **caractérisée en ce que** la première partie de liaison (7a) présente une partie de serrage (8) réglable pour le serrage fixe en rotation du ressort à barre de torsion (6), la partie de serrage (8) entourant de préférence le ressort à barre de torsion (6) de surfaces de serrage (8a) disposées angulairement les unes par rapport aux autres et/ou le ressort à barre de torsion (6) présentant des surfaces de réception (6a) disposées angulairement les unes par rapport aux autres pour venir en prise avec la partie de serrage (8).

6. Remorque de bicyclette (1) selon l'une des revendications 1 à 5, **caractérisée en ce que** les bras oscillants (4) présentent chacun une partie de serrage (4b) pour le serrage fixe en rotation du ressort à barre de torsion (6), la partie de serrage (4b) des bras oscillants (4) entourant de préférence le ressort à barre de torsion (6) de surfaces de serrage (4c) disposées angulairement les unes par rapport aux autres et/ou le ressort à barre de torsion (6) présentant des surfaces de réception (6b) disposées angulairement les unes par rapport aux autres pour venir en prise avec la partie de serrage (4b) des bras oscillants (4).

7. Remorque de bicyclette (1) selon l'une des revendications 2 à 6, **caractérisée en ce que** la première partie de liaison (7a) du bras de levier (7) et/ou la seconde partie de liaison (7b) du bras de levier (7) est disposée dans la direction de l'étendue longitudinale du ressort à barre de torsion (6), au centre, entre les bras oscillants (4).

8. Remorque de bicyclette (1) selon l'une des revendications 1 à 7, **caractérisée en ce qu'**une première butée délimite la plage de pivotement d'au moins l'un des bras oscillants (4), de préférence de tous les bras oscillants (4), dans une première direction de pivotement et/ou une seconde butée délimite la plage de pivotement d'au moins l'un des bras oscillants (4), de préférence de tous les bras oscillants (4), dans une seconde direction de pivotement, la première butée et/ou la seconde butée étant de préférence reliée(s) au cadre de remorque (2) et/ou formée par le cadre de remorque (2).

9. Remorque de bicyclette (1) selon l'une des revendications 1 à 8, **caractérisée en ce que** le cadre de remorque (2) présente une entretoise de renforcement (9) disposée parallèlement au ressort à barre de torsion (6).
